Europäisches Patentamt

**European Patent Office**

**Office européen des brevets**

(19)

(11) Veröffentlichungsnummer: **0 075 670**
**B1**

(12) **EUROPÄISCHE PATENTSCHRIFT**

(45) Veröffentlichungstag der Patentschrift:
17.04.85

(21) Anmeldenummer: **82106588.5**

(22) Anmeldetag: **21.07.82**

(51) Int. Cl.⁴: **F 16 J 1/04**, B 01 J 3/02,
G 01 F 11/02, G 01 F 15/00

(54) Kolben für ein Präzisionsdosiergerät.

(30) Priorität: **28.09.81 DE 3138536**

(43) Veröffentlichungstag der Anmeldung:
**06.04.83 Patentblatt 83/14**

(45) Bekanntmachung des Hinweises auf die Patenterteilung:
**17.04.85 Patentblatt 85/16**

(84) Benannte Vertragsstaaten:
**AT BE CH DE FR GB IT LI NL SE**

(56) Entgegenhaltungen:
**DE - A - 2 061 802**
**DE - A - 2 343 687**
**DE - A - 2 540 407**
**DE - A - 2 743 911**
**US - A - 3 237 815**
**US - A - 3 290 946**

(73) Patentinhaber: **Walter Graf u. Co. GmbH & Co., Am Bildacker 5-7, D-6980 Wertheim/Main (DE)**

(72) Erfinder: **Knödel, Erich, Sonnenbergstrasse 11, D-6980 Wertheim/Kembach (DE)**

(74) Vertreter: **Jaeger, Klaus, Dr., JAEGER & PARTNER Patentanwälte Bergstrasse 48 1/2, D-8035 München-Gauting (DE)**

BUNDESDRUCKEREI BERLIN

**Beschreibung**

Die Erfindung betrifft einen Kolben für ein Präzisionsdosiergerät mit Glaszylinder der im Oberbegriff des Anspruchs 1 genannten Art.

Aus der Druckschrift DE-B-2 743 911 ist ein Kolben aus einem zylindrischen Kern aus Glas, Keramik oder Metall bekannt, auf den thermisch ein starrer schleiffähiger Mantel aus glasfaserverstärktem Polytetrafluorethylen (GFPTFE) aufgeschrumpft ist. Dieser Kolben dient als Dosierkolben in dem Glaszylinder eines Präzisionsdosiergerätes. Unter einem Präzisionsdosiergerät wird dabei vorliegend ein insbesondere für Laboratoriumszwecke eingesetztes Dosiergerät verstanden, von dem eine langfristig stabil reproduzierbare Dosiergenauigkeit von mindestens ±0,1 Vol.-% erwartet wird. Dies wiederum erfordert höchste Maßhaltigkeit und Dichtheit in der Lauffläche zwischen der Innenwand des Glaszylinders und der Außenwand des Kolbens. Ein solches Dosiergerät soll außerdem im unzerlegten Zustand sterilisierbar sein, d. h. unzerlegt auf üblicherweise um oder über 120°C erwärmbar sein, ohne daß der Kolben den Glaszylinder sprengt. Der verwendete Kolben muß außerdem gegenüber allen zu dosierenden aggressiven Chemikalien vollkommen inert und beständig sein. Dies setzt neben der rein chemischen Beständigkeit des als Kolbenmantel verwendeten Materials erfahrungsgemäß auch voraus, daß die Wandung des Mantels bezüglich der zu dosierenden Medien absolut permeationsfest ist.

Im Hinblick auf diese Anforderungen weist der bekannte Kolben einige Schwachstellen auf. So ist es aus verschiedenen Gründen beispielsweise wünschenswert, den Kolbenkern vorzugsweise aus keramischem Werkstoff herzustellen. Bei Ausbildung des Mantels mit offener Stirnseite auf der Arbeitsfläche liegt jedoch der Werkstoff des Keramikkerns für den korrosiven Angriff eines zu dosierenden aggressiven Mediums frei. Selbst die kostenaufwendigsten keramischen Werkstoffe enthalten jedoch stets geringe Anteile Bindemittel, die aus dem keramischen Werkstoff herauslösbar sind, wodurch bereits nicht mehr zu tolerierende Probleme auftreten, wenn ein solches Präzisionsdosiergerät beispielsweise im Bereich der Spurenanalyse eingesetzt werden soll. Versuche, die offene Bodenfläche des Kolbenkerns durch den Mantelwerkstoff zu verschließen, haben nicht zu dem gewünschten Erfolg geführt. Stets traten Mantelbodenverwerfungen auf, die den Dosierfehler meßbar vergrößerten.

Weiterhin liegt es im konstruktiven Bestreben, die zylindrische Wand des Kolbenmantels so dünn wie möglich zu halten. Diesen Bestrebungen setzt jedoch der Verlust der Permeationsfestigkeit des eine inhärente Porosität aufweisenden Werkstoffs PTFE Grenzen. Dies trifft insbesondere auch bei einem faserverstärkten, speziell glasfaserverstärkten PTFE ein. Wird mit einem solchen Werkstoff eine kritische Wandstärke unterschritten; so tritt eine Diffusion des zu dosierenden Mediums in den Phasengrenzflächen zwischen den Verstärkungsfasern und der PTFE-Matrix ein, die letztlich zur Zerstörung des PTFE-Mantels führt. Um dies zu verhindern, muß für den GFPTFE-Mantel eine bestimmte Mindeststärke gewahrt werden, die bei den gebräuchlichen Werkstoffen größenordnungsmäßig im Bereich von 1,0 mm oder wenig darunter liegt. Aus thermischen Gründen wären jedoch dünnere Wandstärken durchaus erwünscht. Solche dünneren Wandstärken würden nicht nur den Arbeitstemperaturbereich des Dosiergerätes erweitern, sondern auch eine Sterilisation des unzerlegten Gerätes bei höheren Temperaturen ermöglichen. Bei der notwendigen Ausbildung des bekannten Kolbens mit arbeitsseitig offenem Boden ist eine solche weitergehende Wandschwächung im Hinblick auf eine ausreichende Lebensdauer des Kolbens nicht möglich.

Angesichts dieses Standes der Technik liegt der Erfindung die Aufgabe zugrunde, einen Kolben der eingangs genannten Art zu schaffen, der ohne Mantelbodenverwerfungen auszubilden und ohne beim Sterilisieren den Glaszylinder des Präzisionsdosiergerätes zu sprengen mit einem arbeitsseitig geschlossenen Mantel ausgebildet werden kann und der dadurch im Bedarfsfall eine Ausbildung des Mantels mit geringerer zylindrischer Wandstärke ermöglicht.

Zur Lösung dieser Aufgabe weist ein Kolben der eingangs genannten Art erfindungsgemäß die im kennzeichnenden Teil des Anspruchs 1 genannten Merkmale auf.

Die Erfindung sieht also vor, bei einem Kolben für ein Präzisionsdosiergerät mit Glaszylinder den aus einem PTFE bestehenden, aus Halbzeug gefertigten Mantel nicht auf einen Kern aus Vollmaterial oder auf einen Kern aus einer einseitig, und zwar arbeitsseitig geschlossenen Hülse thermisch aufzuschrumpfen, sondern statt dessen auf einen starren zylindrischen Kern aus Glas, Keramik oder Metall aufzuschrumpfen, gegebenenfalls unter Zwischenfügen einer Klebstoffschicht, der als beidseitig offenes starres Rohr ausgebildet ist.

Hierbei umfaßt der Begriff »beidseitig offenes Rohr« sowohl streng zylindrische Rohre als auch Rundstäbe, die im Vergleich zum Außendurchmesser eine vorzugsweise in der Längsachse verlaufende Durchgangsbohrung mit relativ kleinem Innendurchmesser aufweisen. Eine derartige Bohrung kann auch stufenweise unterschiedliche Innendurchmesser aufweisen.

Überraschenderweise werden beim thermischen Aufschrumpfen eines einseitig geschlossenen Mantels auf einen solcherart ausgebildeten Kern arbeitsseitig Mantelböden erhalten, die nach dem Planschleifen unter allen thermischen und chemischen Bedingungen völlg unverändert plan bleiben. Die Ursache hierfür ist noch nicht ausreichend erkannt, jedoch deuten erste Versuchsergebnisse darauf hin, daß hier radiale Spannungskräfte über die offene Stirnseite oder die Öffnung in der Stirnseite des Kolbenkerns eine wesentliche Rolle spielen, der Mantelboden also nach Art eines Trommelfelles über die offene Stirnseite oder die Öffnung in der Stirnseite des Kolbenkerns gespannt ist.

Es ist in diesem Zusammenhang ohne weiteres ersichtlich, daß dabei die Spannung des Mantelbodens über die arbeitsseitige Öffnung des Kernrohres hinweg um so größer sein muß, je größer der Durchmesser dieser Öffnung ist. Da jedoch die durch das Aufschrumpfen des Mantels auf den Kern erzielbaren Spannungen des Bodens vorgegeben sind, kann es sich vor allem bei größeren Außendurchmessern des Kerns empfehlen, die arbeitsseitige Öffnung des Kerns dadurch zu verkleinern, daß das Kernrohr relativ dickwandig und mit einem relativ kleinen Innendurchmesser ausgebildet ist. Diese Ausgestaltung braucht sich dabei aber nicht über die gesamte axiale Länge des Kernrohres zu erstrekken, sondern kann auf den arbeitsseitigen, also den der zu dosierenden Flüssigkeit zugewandten Bereich des Kerns, beschränkt bleiben. Das beidseitig offene Rohr, das den Kern bildet, kann also einen abgestuften Innendurchmesser aufweisen, wobei der Kernbereich mit der engeren Öffnung arbeitsseitig liegt und im Extremfall auch axial nur relativ kurz, also nach Art eines mit einer Öffnung versehenen Bodens, ausgebildet sein kann. Dadurch kann ein Verwerfen und Durchwölben des geschlossenen Mantelbodens auch bei relativ großem Kolbenaußendurchmesser ausgeschlossen werden, während gleichzeitig der eigentliche Effekt der Erfindung, daß nämlich der geschlossene Mantelboden mindestens eine arbeitsseitige Öffnung im Kernrohr überspannt, erhalten und wirksam bleibt.

Sowohl unter Kostenaspekten als auch zur Erweiterung des Materialspektrums für den Kern kann das erforderliche Rohr auch aus einem weitgehend massiven zylindrischen Rundstab hergestellt sein. In dieses Rundmaterial wird dann mittig in Längsrichtung eine Bohrung über die gesamte Länge des Kernes vorgesehen. Die Durchgangsbohrung kann dabei auch abgestuft ausgebildet sein, wobei allein wesentlich ist, daß die arbeitsseitige Öffnung des Kernes über eine Innenbohrung durch den Kern hindurch mit dem axial gegenüberliegenden anderen Ende des Kerns in Verbindung steht.

Durch das Anbringen einer derartigen Durchgangsbohrung ist außerdem gewährleistet, daß beim Aufschrumpfen des unverstärkten oder verstärkten PTFE-Mantels Gas- oder Lufteinschlüsse zwischen Mantel und Kern vermieden werden können. Hierdurch wird zusätzlich das Aufschrumpfen des Mantels selbst erleichtert. Die arbeitsseitige Stirnseite des Rohres des Kerns wird vorzugsweise exakt plan hergestellt und liegt senkrecht zur Längsachse des Kerns.

Sowohl bei der Verwendung eines reinen und unverstärkten PTFE als auch bei Verwendung eines verstärkten, insbesondere faser- oder pulververstärkten PTFE als Mantelwerkstoff wird der thermisch auf das Kernrohr aufzuschrumpfende Mantel, genauer gesagt die Mantelhülse, nach einer Ausgestaltung der Erfindung vorzugsweise aus einem massiven Vollmaterial in Form eines Rundstabes durch Aufbohren oder Aufdrehen hergestellt. Ein solches Ausgangsmaterial ist durch eine ungewöhnlich hohe Dichte und damit Permeationsfestigkeit des stark zur Makroporosität und Mikroporosität neigenden PTFE gekennzeichnet. Außerdem wird ein absolut dichter und nicht erst durch nachträgliches Ansintern erhaltener Übergang bzw. eine absolut dichte Verbindung zwischen dem Mantelboden und dem zylindrischen Mantelteil erzielt, die auch nach jahrelanger Dauerbenutzung jedes Eindiffundieren des zu dosierenden Mediums in die Phasengrenzfläche zwischen dem Mantel und dem Kolbenkern ausschließt.

Da auf diese Weise ein hermetisches Verschließen der Arbeitsfläche des Dosierkolbens mit dem Werkstoff des Kolbenmantels herbeigeführt wird, brauchen Hersteller und Benutzer der mit dem Kolben gemäß der Erfindung ausgestalteten Präzisionsdosiergeräte nicht mehr eine Wechselwirkung des zu dosierenden Mediums mit dem Kolbenkernmaterial zu befürchten. Der Hersteller der Präzisionsdosiergeräte kann den Werkstoff für den Kolbenkern nach rein konstruktiven Gesichtspunkten auswählen, ohne dabei durch die chemische Beschaffenheit des Werkstoffs des Kolbenkerns eingeschränkt zu sein. Außerdem kann durch das Abschließen der Grenzfläche zwischen dem Kolbenmantel und dem Kolbenkern gegenüber dem zu dosierenden Medium jegliches Eindiffundieren des zu dosierenden Mediums in diesen Grenzflächenbereich hinein ausgeschlossen werden. Es hat sich gezeigt, daß dadurch die Haltbarkeit des Kolbens insbesondere gegenüber organischen Lösungsmitteln verbessert werden kann. Gleichzeitig kann dadurch weiterhin die Zylinderwandstärke des Mantels bis in den kritischen Grenzbereich hinein dünner ausgebildet werden, ohne daß dadurch die Standzeit des Kolbens beeinträchtigt wird.

Die eigentliche Überraschung, die mit dem Kolben gemäß der Erfindung erhältlich wurde, liegt jedoch darin, daß als Mantelmaterial selbst bei Mantelbodenstärken von bis zu ca. 8 oder 10 mm reines unverstärktes PTFE eingesetzt werden kann. Ein Präzisionsdosiergerät mit Glaszylinder, das einen Kolben gemäß der Erfindung mit einem Mantel aus reinem PTFE und einem einstückigen Mantelboden mit einer Stärke von nicht größer als 10 mm enthält, wobei die Stärke der zylindrischen PTFE-Mantelwand nicht größer als ca. 0,5 mm ist, kann unzerlegt bis auf ca. 150° C im Trockenschrank erwärmt werden, ohne daß der Kolben den Glaszylinder des Präzisionsdosiergerätes sprengt. Es wird angenommen, daß dies auf eine erhöhte radiale Stauchbarkeit des Mantelbodens bei Ausbildung des Kolbenkerns als beidseitig offenes Rohr ermöglicht wird. Der große Vorteil der Verwendung eines starren und aus massivem Halbzeug hergestellten Mantels aus reinem PTFE gegenüber einem entsprechenden Mantel aus faserverstärktem PTFE liegt darin, daß ein solcher Mantel aus unverstärktem PTFE bis zu deutlich geringeren Wandstärken permeationsfest bleibt, da bei reinem PTFE die Gefahr der Grenzflächendiffusion entlang der Verstärkungsfasern entfällt. Außerdem ist reines PTFE gegen chemischen Angriff beständiger als verstärktes PTFE.

Nach der vorstehend beschriebenen Ausgestaltung der Erfindung ist also der Präzisionsdosierkolben gemäß der Erfindung vorzugsweise mit einem Mantel aus einem ungefüllten und unverstärkten reinen PTFE versehen. Gegenüber den aus der Druckschrift DE-A-2 343 687 bekannten Dosierkolben, die mit einem durch Beschichten hergestellten PTFE-Überzug versehen sind, weist der Kolben gemäß der Erfindung, der einen PTFE-Mantel aus thermisch aufgeschrumpftem Halbzeug aufweist, den Vorteil der absoluten Permeationsfestigkeit auch gegenüber wäßrigen Mineralsäuren, konzentrierten wäßrigen Alkalimetallaugen und gegenüber organischen Lösungsmitteln, insbesondere Tetrachlorkohlenstoff, auf. Da die durch Beschichten hergestellten bekannten Kolbenüberzüge nicht in dem Grad kompaktiert werden und werden können wie ein PTFE-Halbzeug, aus dem der Mantel des Kolbens gemäß der Erfindung hergestellt ist, ist eine solche Permeationsfestigkeit bei den bekannten Kolben prinzipiell nicht erzielbar. Außerdem sind die bekannten Kolben wesentlich anfälliger gegenüber mechanischer Beschädigung.

Wie bereits oben angedeutet, liegt ein weiterer Vorteil des Kolbens gemäß der Erfindung darin, daß der Boden des Mantels wesentlich stärker als die zylindrische Mantelwandfläche ausgebildet werden kann. Nach einer Weiterbildung der Erfindung ist der Boden vorzugsweise mindestens fünfmal, insbesondere mindestens zehnmal so stark (gemessen in axialer Richtung) wie die zylindrische Mantelwand (gemessen in radialer Richtung). Durch eine solche Bemessung wird eine ideale Kombination thermischer und chemischer Kenndaten des Kolbens erhalten.

Zur Herstellung des Kolbens gemäß der Erfindung wird vorzugsweise ein Vollmaterial in Form eines Rundstabes zunächst in der benötigten Länge abgelängt und dann ausgebohrt oder aufgedreht. Dabei ist der lichte Innendurchmesser der so durch Bohren oder Aufdrehen hergestellten PTFE-Hülse kleiner, vorzugsweise 2 bis 3% kleiner, als der Außendurchmesser des Kernrohres. Der Außendurchmesser der auf das Kernrohr thermisch aufzuschrumpfenden PTFE-Hülse ist deutlich größer als der für den Einsatzzweck vorgesehene Solldurchmesser, und zwar vorzugsweise um ca. 5 bis 15% größer als dieser Solldurchmesser. Die auf diese Weise ausgehend von einem verstärkten oder unverstärkten PTFE-Vollmaterial durch materialabhebende Formgebung hergestellte Mantelhülse wird dann gleichmäßig auf eine Temperatur im Bereich von ungefähr 200 bis 250° C erwärmt. Die warme Hülse wird dann, gegebenenfalls unter Einfügung einer Klebstoffschicht zwischen Kern und Mantel, auf ein auf Zimmertemperatur befindliches Kernrohr aufgepreßt. Anschließend wird der so erhaltene Verbundkolben auf Raumtemperatur abgekühlt. Nach dem Abkühlen wird der Außenmantel des Kolbens auf Sollmaß geschliffen und im Fall von gefülltem PTFE-Material anschließend präzisionspoliert.

Die Erfindung ist im folgenden anhand von Ausführungsbeispielen in Verbindung mit den Zeichnungen näher erläutert. Es zeigt

Fig. 1 in schematischer perspektivischer Darstellung ein Ausführungsbeispiel des Kolbens;

Fig. 2 in Teildarstellung einen Axialschnitt durch einen weiteren Kern, ohne Mantel; und

Fig. 3 ebenfalls in Teildarstellung ein drittes Ausführungsbeispiel des Kolbens.

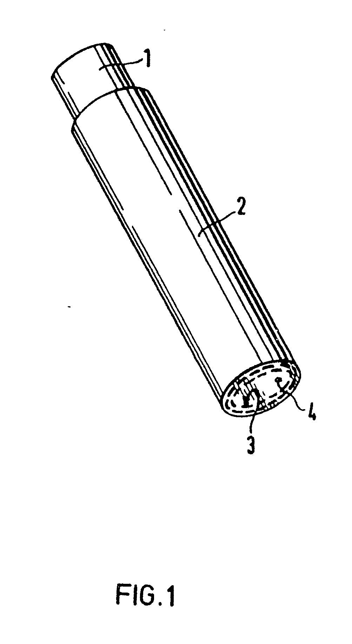

In der Fig. 1 ist ein erstes Ausführungsbeispiel des Kolbens gemäß der Erfindung in perspektivischer Darstellung gezeigt. Der Kern 1 besteht aus einem beidseitig offenen Keramikrohr, also aus einem Rohr, das auch arbeitsseitig eine offene Stirnfläche 3 aufweist. Auf diesen Kern ist ein Mantel 2 aus einem vorgefertigten starren PTFE-Rohr thermisch aufgeschrumpft, der arbeitsseitig durch einen einstückig angeformten Boden eine geschlossene Arbeitsfläche 4 aufweist. Die Arbeitsfläche 4 und die zylindrische Mantelfläche des Mantels 2 sind also einstückig miteinander aus einem starren Halbzeug ausgeformt. Der Boden mit der Arbeitsfläche 4 verschließt die offene Stirnseite 3 des rohrförmigen Kolbenkerns 1. Der Außendurchmesser der aus starrem PTFE-Halbzeug bestehenden Mantelhülse 2 ist exakt auf Paßmaß für den Glaszylinder geschliffen, in den der Kolben eingesetzt wird.

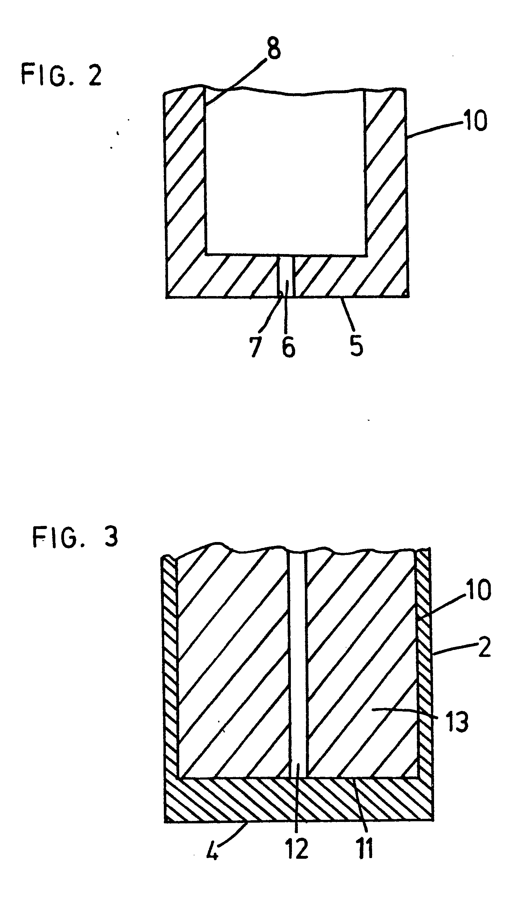

Im Gegensatz zu dem in Fig. 1 gezeigten Kern 1 weist das Ausführungsbeispiel des Kerns nach Fig. 2 ein Rohr 10 mit abgestuftem Innendurchmesser auf, das auf der Arbeitsseite des Kolbens mit einem axial nur so kurzen Abschnitt mit verengtem Innendurchmesser ausgebildet ist, daß eine Art Abschlußboden 5 entsteht. Der Abschlußboden 5, der etwa die gleiche Stärke wie die Rohrwandung aufweist, ist in der Längsachse des Rohres 10 mit einer Durchgangsöffnung 6 versehen. Diese Durchgangsöffnung 6 hat einen wesentlich kleineren Durchmesser 7 als der Innendurchmesser 8 des übrigen Rohres 10. Die Durchgangsöffnung 6, die eine Verbindung zwischen der arbeitsseitigen Stirnseite 5 des Kernrohres 10 und dem Inneren des Rohres 10 und damit auch dem gegenüberliegend kopfseitigen Rohrende (in Fig. 2 nicht gezeigt) herstellt, ist je nach Materialwahl des Rohres 10 entweder bereits vorgeformt oder kann nach Herstellung des Rohres in einem nachfolgenden Arbeitsgang, zum Beispiel durch Bohren, hergestellt werden.

In Fig. 3 ist ein weiteres Ausführungsbeispiel des Kolbens mit einem Kern 13 und einem äußeren Mantel 2 gezeigt, wobei das Rohr 10 relativ dickwandig ist und nur einen relativ kleinen Innendurchmesser der inneren Bohrung 12 aufweist.

Die in den Fig. 2 und 3 als Grenzfälle schematisch dargestellten Ausführungsbeispiele des Kolbens gemäß der Erfindung werden insbesondere für Kolben mit großen Außendurchmessern eingesetzt.

## Patentansprüche

1. Kolben aus einem zylindrischen Kern (1) aus Glas, Keramik oder Metall und einem mit oder ohne Zwischenfügung einer Klebstoffschicht thermisch auf den Kern aufgeschrumpften, arbeitsseitig geschlossenen, starren und präzisionsgeschliffenen Mantel (2) aus einem mit Glasfasern gefüllten oder ungefüllten Polytetrafluorethylen (PTFE) für Präzisionsdosiergeräte mit Glaszylinder, dadurch gekennzeichnet, daß der Kern (1) ein beidseitig offenes starres Rohr ist und daß der arbeitsseitig geschlossene Boden des Mantels (2) an der Kernstirnfläche (11) anliegt.

2. Kolben nach Anspruch 1, dadurch gekennzeichnet, daß der Mantel (2) aus einem ungefüllten und unverstärkten PTFE besteht.

3. Kolben nach einem der Ansprüche 1 oder 2, dadurch gekennzeichnet, daß das beidseitig offene Rohr (10) des Kerns (1) einen abgestuften Innendurchmesser aufweist, wobei der Kernbereich mit der engeren Öffnung (6) arbeitsseitig liegt.

4. Kolben nach Anspruch 1 oder 2, dadurch gekennzeichnet, daß das Rohr (10) dickwandig und mit einem relativ kleinen Innendurchmesser ausgebildet ist.

5. Kolben nach einem der Ansprüche 1 bis 4, dadurch gekennzeichnet, daß der die geschlossene Arbeitsfläche (4) des Kolbens bildende Boden des Mantels (2) mindestens fünfmal so dick wie die zylindrische Wand des Mantels ist.

6. Kolben nach einem der Ansprüche 1 bis 5, dadurch gekennzeichnet, daß der Mantel (2) einstückig ist.

## Claims

1. A piston for a precision dosing device with a glass cylinder consisting of a cylindrical core (1) of glass, ceramic or metal and a rigid and precision ground sleeve (2) of a polytetrafluorethylene (PTFE) filled or non-filled with glass fibres, said sleeve being closed at its working end and thermally shrunk onto the core either directly or via an adhesive layer, characterized in that the core (1) consists of a rigid tube open at both ends, and in that the bottom of the sleeve (2) closed at its working end is in contact with the front (11) of said core.

2. A piston according to claim 1, characterized in that the sleeve (2) consists of a non-filled or non-reinforced PTFE.

3. A piston according to one of claims 1 or 2, characterized in that the tube (10) of the core (1) open at both ends has a graduated inside diameter, that portion of said core being positioned at the working end having the smaller opening (6).

4. A piston according to claim 1 or 2, characterized in that the tube (10) is thick-walled with a relatively small inside diameter.

5. A piston according to one of claims 1 to 4, characterized in that the bottom of the sleeve (2) forming the closed working end (4) of the piston is at least five times thicker than the cylindrical wall of said sleeve.

6. A piston according to one of claims 1 to 5, characterized in that the sleeve (2) is formed as one integral piece.

## Revendications

1. Piston destiné à un dispositif de dosage précis à cylindre de verre et comprenant un noyau (1) cylindrique en verre, en céramique ou en métal et une enveloppe (2) rigide, polie avec précision, fermée du côté travail, resserrée thermiquement sur le noyau, avec ou sans intercalation d'une couche d'adhésif, et constituée par du polytétrafluoréthylène (PTFE) rempli ou non de fibres de verre, caractérisé en ce que le noyau (1) est un tube rigide ouvert des deux côtés, et en ce que le fond de l'enveloppe (2), fermé du côté travail, s'applique contre la surface frontale (11) du noyau.

2. Piston selon la revendication 1, caractérisé en ce que l'enveloppe (2) est constituée par du PTFE non chargé et non renforcé.

3. Piston selon l'une des revendications 1 ou 2, caractérisé en ce que le tube (10) ouvert des deux côtés du noyau (1) présente un diamètre intérieur en gradins, la partie du noyau dont l'ouverture (6) est la plus étroite étant du côté travail.

4. Piston selon l'une des revendications 1 ou 2, caractérisé en ce que le tube (10) a une paroi épaisse et un diamètre intérieur assez réduit.

5. Piston selon l'une des revendications 1 à 4, caractérisé en ce que le fond de l'enveloppe (2) qui constitue la surface de travail fermée (4) du piston a au moins cinq fois l'épaisseur de la paroi cylindrique de l'enveloppe.

6. Piston selon l'une des revendications 1 à 5, caractérisé en ce que l'enveloppe (2) est d'une seule pièce.

FIG.1

FIG. 2

FIG. 3